## Europäisches Patentamt

## European Patent Office

## Office européen des brevets

(19)

(11) Veröffentlichungsnummer: **0 065 687**
**B1**

(12) # EUROPÄISCHE PATENTSCHRIFT

(45) Veröffentlichungstag der Patentschrift:
**24.07.85**

(21) Anmeldenummer: **82104033.4**

(22) Anmeldetag: **10.05.82**

(51) Int. Cl.⁴: **B 01 J 31/08,** C 01 B 5/00,
B 01 J 39/04, B 01 J 41/04,
B 01 J 47/04, B 01 J 49/00

(54) **Verfahren zur Durchführung katalytischer Reaktionen in wässrigen Medien.**

(30) Priorität: **21.05.81 DE 3120213**

(73) Patentinhaber: **BAYER AG, Konzernverwaltung RP
Patentabteilung, D-5090 Leverkusen 1 Bayerwerk (DE)**

(43) Veröffentlichungstag der Anmeldung:
**01.12.82 Patentblatt 82/48**

(72) Erfinder: **Thomas, Paul, Ing.grad., Elisabeth-Langgässer
Strasse 35, D-5090 Leverkusen 1 (DE)**
Erfinder: **Martinola, Friedrich, Dr.,
Leopold-Gmelin-Strasse 16, D-5000 Köln 80 (DE)**

(45) Bekanntmachung des Hinweises auf die Patenterteilung:
**24.07.85 Patentblatt 85/30**

(84) Benannte Vertragsstaaten:
**AT BE CH DE FR IT LI NL**

(56) Entgegenhaltungen:
**DE - A - 1 642 494
DE - B - 1 112 047
FR - A - 2 139 877
LU - A - 56 802
US - A - 3 668 271**

## Beschreibung

Die Erfindung betrifft ein Verfahren zur Durchführung katalytischer Reaktionen in wässrigen Medien mittels mit katalytisch wirksamen Elementen beladenen Ionenaustauschern. Diese mit katalytisch wirksamen Elementen beladenen Ionenaustauscher werden nachfolgend als Katalysatorharze bezeichnet.

Es ist bekannt, Ionenaustauscher als Träger für katalytisch wirksame Elemente, z.B. Metalle der 8. Nebengruppe des periodischen Systems der Elemente, zu verwenden. Herstellung und Verwendung solcher Katalysatorharze sind z.B. in der US-A-3 668 271 beschrieben. Bei der Beschreibung der Herstellung wird auf die Möglichkeit hingewiesen, nach der Aufbringung der katalytisch wirksamen Metalle auf die Ionenaustauscher die austauschaktiven Gruppen durch eine entsprechende Behandlung mit Säuren oder Basen zu regenerieren, um auf diese Weise zu Katalysatorharzen zu gelangen, die ausser den katalytisch wirksamen Metallen auch noch freie, d.h. in der H$^+$-Form vorliegende Säuregruppen, z.B. –SO$_3$H-Gruppen, oder in der OH$^-$-Form vorliegende basische Gruppen, z.B. Trimethylammoniumhydroxid-Gruppen, aufweisen. Die praktische Anwendung mit katalytisch wirksamen Elementen beladener Ionenaustauscher wird ferner z.B. in der DE-B-16 43 044 und von H. Kurapkat in «Die katalytische Reduktion von Sauerstoff in wässriger Lösung» Sonderheft VGB-Speisewassertagung 1967, Seiten 53–58 beschrieben.

Von diesen Katalysatorharzen hat man nicht nur die katalytische Wirksamkeit der zur Beladung verwendeten katalytisch wirksamen Elemente ausgenutzt, sondern – wo dies möglich war – auch die katalytische Wirksamkeit ihrer austauschaktiven Gruppen. So hat man z.B. mit Palladium beladene starksaure Kationenaustauscher für Reaktionen einesetzt, in denen gleichzeitig oder nacheinander eine durch Palladium katalysierte Hydrierung und eine durch starke Säuren katalysierte Veresterung oder Veretherung vorgenommen werden sollten. Bislang hat man aber nie von der ionenaustauschenden Wirkung der austauschaktiven Gruppen der Katalysatorharze Gebrauch gemacht, obgleich ein Entfernen von bei der Katalyse an die Reaktionslösung abgegebenen Ionen, z.B. aus dem Edelmetall entstandenen Edelmetallionen, oder von in der Reaktionslösung bereits enthaltenen störenden Ionen erforderlich war. Die Katalysatorharze wurden vielmehr, ohne Rücksicht darauf, dass ihre Ionenaustauscherkapazität erschöpft war, solange verwendet, bis auch ihre katalytische Aktivität verbraucht war. Da die austauschaktiven Gruppen nicht regeneriert wurden, waren die Katalysatorharze nach mehr oder weniger kurzem Gebrauch zu einem Ionenaustausch nicht mehr befähigt. Die bei der Katalyse an die Reaktionslösung abgegebenen und/oder bereits in dieser enthaltenen störenden Ionen wurden vielmehr durch Behandeln der Reaktionslösung mit dem Katalysatorharz nachgeschalteten Ionenaustauscherharzen entfernt.

Es wurde nun gefunden, dass man den Aufwand einer solchen gesonderten Behandlung der Reaktionslösungen mit nachgeschalteten Ionenaustauscherharzen einsparen und die unerwünschten Ionen aus der Reaktionslösung unmittelbar mit Hilfe der austauschaktiven Gruppen der Katalysatorharze entfernen kann, wenn man

a) das Katalysatorelement auf einen im Hinblick auf die zu entfernenden Ionen ausgewählten Ionenaustauschertyp aufbringt und gleichzeitig dafür sorgt, dass sich die austauschaktiven Gruppen in einer Beladungsform befinden, dass sie die zu entfernenden Ionen zu binden vermögen; und

b) die austauschaktiven Gruppen des Katalysatorharzes, sobald sie erschöpft sind, in für die Regenerierung von austauschaktiven Gruppen bekannter Weise regeneriert.

Überraschenderweise wurde nämlich gefunden, dass die katalytische Aktivität des Katalysatorelementes durch das für die austauschaktiven Gruppen erforderliche Regenerieren der Katalysatorharze nicht beeinträchtigt wird. Obwohl zu erwarten war, dass die Behandlung der erschöpften (beladenen) austauschaktiven Gruppen der Katalysatorharze mit Schwefelsäure oder Salzsäure (bei kationenaktiven Katalysatorharzen) bzw. mit Natronlauge (bei anionenaktiven Katalysatorharzen) wenn nicht zu einer Ablösung des Katalysatorelementes so doch zumindest zu einer Veränderung der Oberflächenstruktur und damit der Aktivität führen würde, wurde auch nach wiederholtem Regenerieren keine Abnahme der katalytischen Wirksamkeit der auf die Katalysatorharze aufgebrachten katalytisch wirksamen Elemente festgestellt.

Die Erfindung betrifft daher ein Verfahren zur Durchführung katalytischer Reaktionen in wässrigen Medien mit Katalysatorharzen, das dadurch gekennzeichnet ist, dass man das Katalysatorharz gleichzeitig als Katalysator und zur Adsorption der im wässrigen Medium vorhandenen Ionen verwendet und die austauschaktiven Gruppen des Katalysatorharzes regeneriert, sobald diese erschöpft sind.

In dem erfindungsgemässen Verfahren werden als Träger für die katalytisch wirksamen Elemente solche Ionenaustauscherharze eingesetzt, die aufgrund ihrer austauschaktiven Gruppen (austauschaktive Gruppen in Kationenaustauschern: –SO$_3$H, –COOH; austauschaktive Gruppen in Anionenaustauschern: Aminogruppen, Ammoniumgruppen) und deren Beladungsform (bei Kationenaustauschern: H$^+$-Form, Alkalimetall- oder Erdalkalimetallsalzform; Anionenaustauscher: OH$^-$-Form, Salzform) die aus den wässrigen Medien zu entfernenden Ionen zu adsorbieren vermögen.

Erfindungsgemäss werden nicht wie bislang beliebige Ionenaustauscher mit dem gewünschten Katalysatorelement beladen, sondern es werden im Hinblick auf die aus den wässrigen Medien zu entfernenden Ionen stark- oder schwachsaure Kationenaustauscher oder stark-, mittel- oder schwachbasische Anionenaustauscher als Träger für das gewünschte Katalysatorelement ausgewählt. Ausserdem wird die Beladungsform der austauschaktiven Gruppen den zu adsorbierenden Ionen angepasst. Wird z.B. bei den mit Hilfe von Katalysatorharzen durchgeführten katalytischen Reaktionen ein vollständiges Entfernen der Ionen aus den wässrigen Medien gewünscht und nicht nur ein Austausch der Ionen gegen andere Metallionen (z.B. Austausch von Calciumionen gegen Natriumionen), so wird man die kationenaktiven Katalysatorharze vorzugsweise in der $H^+$-Form, die anionenaktiven Katalysatorharzen vorzugsweise in $OH^-$-Form einsetzen.

In dem erfindungsgemässen Verfahren werden vorzugsweise mit Metallen der 8. Nebengruppe des periodischen Systems der Elemente beladene Ionenaustauscher verwendet.

Die Herstellung der in dem erfindungsgemässen Verfahren zu verwendenden Katalysatorharze ist bekannt. Sie ist z.B. in der vorstehend genannten Veröffentlichung von Kurapkat oder der DE-B-16 43 044, ferner in der DE-C-11 12 047 oder im Journal of Catalysis 32, Seiten 204–215 (1974) beschrieben.

Das erfindungsgemässe Verfahren eignet sich besonders für katalytische Hydrierungen in wässrigen Medien, insbesondere von katalytischen Hydrierungen von Sauerstoff zu Wasser in wässrigen Medien, z.B. in Kondensat (= bei der Kondensation des zum Antreiben von Turbinen verwendeten Wasserdampfs erhaltenen Wassers) und Kesselspeisewässern.

Bei der Aufbereitung von Kondensat und Kesselspeisewasser wurde bislang in zwei getrennten Verfahrensstufen zunächst der in ihnen gelöste Sauerstoff durch katalytische Reduktion in Gegenwart von Palladium in Wasser überführt und die in ihnen gelösten Ionen in einer zweiten Verfahrensstufe durch Ionenaustausch entfernt. Mit Hilfe des erfindungsgemässen Verfahrens wird es nunmehr möglich, beide Verfahrensschritte in einem einzigen Verfahrensschritt und innerhalb eines einzigen Filters auszuführen.

Das erfindungsgemässe Verfahren kann auch in Mischbettfiltern vorgenommen werden. Für diese Anwendung werden kationenaktive Katalysatorharze mit Anionenaustauschern oder anionenaktive Katalysatorharze mit Kationenaustauschern kombiniert. Mit solchen Mischbettfiltern können gleichzeitig die gewünschte katalytische Umsetzung und eine vollständige Abtrennung der im Wasser bzw. wässrigen Medium enthaltenen Ionen erreicht werden. In solchen Mischbettfiltern kann das Katalysatorharz sowohl die kationenaktive, d.h. das Kationenaustauscherharz, als auch die anionenaktive Komponente, d.h. der Anionenaustauscher sein.

Beispiel 1

1 Liter eines mit 2,5 g metallischem Palladium beladenen starksauren Kationenaustauschers auf Basis von mit Divinylbenzol vernetzter Polystyrolsulfonsäure wird in bekannter Weise durch Regenerieren mit Salzsäure in die $H^+$-Form überführt und in eine Filtersäule (innerer Durchmesser: 50 mm) gefüllt.

Die Filtersäule wird bei 20 °C mit mit Sauerstoff gesättigtem Trinkwasser (Sauerstoffgehalt: 8,85 mg/l), dem noch Wasserstoff in einer Menge von 1,20 mg/l zugesetzt worden war und das 2,6 meq/l Bicarbonate und 8,3 Milliäquivalente/l an Kationen enthält, bei einer Durchlaufgeschwindigkeit von 33 l/h beladen.

Die Beladung wird abgebrochen, sobald in dem aus dem Filter ablaufenden Wasser der Gehalt an Kationen auf 10% des Gehaltes an Kationen im ursprünglichen Trinkwasser angestiegen ist. Bis zu diesem Durchbruch können mit dem Filter 144 l Wasser entkationisiert werden. Das aus dem Filter ablaufende Wasser enthält noch 0,009 mg Sauerstoff/l.

Das erschöpfte Harz wird anschliessend durch Behandeln mit 6%iger Salzsäure regeneriert. Nach dem Auswaschen mit Rohwasser ist das Filter wieder betriebsbereit. Auch nach 10-maliger Wiederholung des Arbeitsspieles ist noch keine Abnahme der katalytischen Wirksamkeit des Harzes bei der Sauerstoffreduktion feststellbar.

Beispiel 2

1 Liter eines mit 1 g metallischem Palladium beladenen stark basischen Anionenaustauschers wird in eine Filtersäule (innerer Durchmesser: 50 mm) gefüllt. Das Harz wird in bekannter Weise durch Regenerieren mit Natronlauge in die OH-Form überführt, in üblicher Weise mit entsalztem Wasser ausgewaschen und anschliessend mit entkationisiertem und in einem Rieselentgaser vom gelösten Kohlendioxid befreite Wasser mit einer Durchflussgeschwindigkeit von 20 l/h beladen. Das Wasser war 23 °C mit Sauerstoff gesättigt und enthielt noch 1,06 g/l Wasserstoff gelöst. Der Gehalt des entcarbonisierten Wassers an Ionen beträgt:

Summe aus Chloridionen und Sulfationen: 5,6 Milliäquivalente/l
Summe aus Kohlensäure Kieselsäure: +0,4 do.

Bis zum Anstieg des Kieselsäuregehaltes im aus dem Filter ablaufenden Wasser auf 0,1 mg $SiO_2$/l können 68 l Wasser durchgesetzt werden. Der Sauerstoffgehalt des aus dem Filter ablaufenden Wassers beträgt nur noch 0,01 mg/l.

Das erschöpfte Harz wird anschliessend durch Behandeln mit 10%iger Natronlauge regeneriert. Nach dem Auswaschen mit entsalztem Wasser ist das Filter wieder betriebsbereit. Auch nach 10-maliger Wiederholung des Arbeitsspieles ist noch keine Abnahme der katalytischen Wirksamkeit des Harzes bei der Sauerstoffreduktion feststellbar.

Beispiel 3

1 Liter eines mit 1 g metallischem Palladium beladenen stark basischen Anionenaustauschers ist in eine Filtersäule (innerer Durchmesser: 50 mm) eingefüllt. Das Harz wird mit 170 g Natronlauge in Form einer 4%igen Lösung regeneriert und mit entsalztem Wasser ausgewaschen. Anschliessend wird das Harz mit Kondensat beladen. Das Kondensat weist eine Temperatur von 26,5 °C auf und enthält 7,95 mg Sauerstoff/l und 1,0 mg Wasserstoff/l; das Wasser weist eine Leitfähigkeit von 0,74 μS/cm und 0,03 mg $SiO_2$/l auf. Die Durchflussgeschwindigkeit während des Beladens beträgt 75 l/h.

Das aus dem Filter ablaufende Wasser weist eine Leitfähigkeit von 0,07 μS/cm, einen $SiO_2$-Gehalt von 0,008 mg/l und einen Restgehalt an Sauerstoff von 0,005–0,007 mg/l auf.

Nach einer Laufzeit von 20 Stunden wird das Harz durch Überfiltrieren einer 6%igen Kochsalzlösung erschöpft und mit 170 g NaOH (4%ige Lösung) wieder regeneriert. Dieses Arbeitsspiel wurde 10-mal wiederholt. Auch nach 10-maliger Wiederholung des Beladungs- und Regeneriervorganges macht sich keine Abnahme der katalytischen Wirksamkeit bei der Sauerstoff-Reduktion bemerkbar.

Beispiel 4

0,35 Liter eines mit 2 g metallischem Palladium je Liter beladenen starksauren Kationenaustauschers auf Basis von mit Divinylbenzol vernetzter Polystyrolsulfonsäure in der $H^+$-Form werden mit 0,65 l eines starkbasischen Anionenaustauschers in der $OH^-$-Form innig gemischt. Die Mischung wird in eine Filtersäule (innerer Durchmesser: 50 mm) gefüllt.

Durch die Harzmasse wird Wasser mit einer Geschwindigkeit von 55 l/h filtriert. Das Wasser enthält: 6,68 mg $O_2$/l (28 °C); 0,82 mg $H_2$/l und 0,005 mg $SiO_2$/l; seine Leitfähigkeit beträgt: 0,73–0,80 μS/cm bzw. nach Kochsalzzusatz 20–30 μS/cm.

Das aus dem Filter ablaufende Wasser weist noch einen Restgehalt an Sauerstoff von 0,055 mg/l auf. Die Leitfähigkeit beträgt: 0,065 μS/cm bzw. nach Kochsalzzugabe 0,16 μS/cm. Wasserstoff und Palladiumionen sind im Ablauf nicht mehr nachweisbar.

Zum Regenerieren wird das Mischbett in bekannter Weise in der Filtersäule durch nach oben strömendes Wasser in Kationen- und Anionenaustauscher aufgetrennt. Der Anionenaustauscher wird mit 120 g Natronlauge (in Form einer 4%igen Lösung) je Liter Harz regeneriert und durch Auswaschen mit Wasser von überschüssiger Natronlauge befreit. Der Kationenaustauscher wird mit 120 g HCl (in Form einer 6%igen Lösung) je Liter Harz regeneriert und der Regeneriermittelüberschuss durch Auswaschen mit Wasser entfernt. Anschliessend werden die beiden Ionenaustauscher wieder innig miteinander vermischt und die auf diese Weise frisch regenerierte Säule erneut beladen. Beladung und Regenerierung konnten 20 mal wiederholt werden, ohne dass ein Nachlassen des Ionenaustauschvermögens oder der Katalysatoraktivität feststellbar war.

Beispiel 5

0,65 Liter eines mit 1 g Palladium je Liter Harz beladenen, mit vollentsalztem Wasser ausgewaschenen starkbasischen Anionenaustauschers in der OH-Form werden mit 0,35 l eines stark sauren Kationenaustauschers in der H-Form innig gemischt. Die Mischung wird in eine Filtersäule (innerer Durchmesser: 50 mm) gefüllt.

Durch die Harzmasse wird ein Wasser der im Beispiel 4 beschriebenen Qualität mit einer Geschwindigkeit von 60 l/h filtriert.

Das aus dem Filter ablaufende Wasser weist noch einen Restgehalt an 0,008 bis 0,01 mg $O_2$/l auf. Palladiumionen sind nicht nachweisbar und die Leitfähigkeit des ablaufenden Wassers beträgt 0,08 μS/cm bzw. nach Zusatz von Kochsalz 0,12 μS/cm.

Nach dem Beladungsvorgang wird das Mischbettfilter regeneriert: Die beiden Harze werden durch aufströmendes Wasser voneinander getrennt und in separate Filtersäulen überführt. Der Kationenaustauscher wird mit 150 g $H_2SO_4$ (in Form einer 6%igen Lösung) je Liter Kationenaustauscher und der Anionenaustauscher mit 100 g NaOH (in Form einer 4%igen Lösung) je Liter Anionanaustauscher regeneriert und anschliessend ausgewaschen. Die regenerierten Ionenaustauscher werden anschliessend innig vermischt und wiederum in die Beladungssäule eingeführt. Auch nach 10 maligem Regenerieren und Beladen hatten weder Katalysatorwirkung noch Ionenaustauschvermögen nachgelassen.

**Patentansprüche**

1. Verfahren zur Durchführung katalytischer Reaktionen in wässrigen Medien mittels mit katalytisch wirksamen Elementen beladenen Ionenaustauschern (Katalysatorharzen), dadurch gekennzeichnet, dass man den mit katalytisch wirksamen Elementen beladenen Ionenaustauscher (Katalysatorharz) gleichzeitig als Katalysator und zur Adsorption der im wässrigen Medium vorhandenen Ionen verwendet und die austauschaktiven Gruppen des mit katalytisch wirksamen Elementen beladenen Ionenaustauschers (Katalysatorharzes) regeneriert, sobald diese erschöpft sind.

2. Verfahren gemäss Anspruch 1, dadurch gekennzeichnet, dass man einen mit Metallen der 8. Nebengruppe des periodischen Systems beladenen Ionenaustauscher verwendet.

3. Verfahren gemäss Ansprüchen 1 und 2, dadurch gekennzeichnet, dass man einen mit Metallen der 8. Nebengruppe des periodischen Systems beladenen starksauren Kationenaustauscher oder starkbasischen Anionenaustauscher verwendet.

4. Verfahren gemäss Ansprüchen 1 bis 3, dadurch gekennzeichnet, dass es sich bei den katalytischen Reaktionen in wässrigen Medien um Hydrierungen mit Wasserstoff handelt.

5. Verfahren gemäss Ansprüchen 1 bis 4, dadurch gekennzeichnet, dass es sich bei den katalytischen Reaktionen in wässrigen Medien um die katalytische Hydrierung von Sauerstoff in wässrigen Medien handelt.

**Revendications**

1. Procédé pour la conduite de réactions catalytiques dans des milieux aqueux au moyen d'échangeurs ioniques (résines-catalyseurs) chargés d'éléments doués d'activité catalytique, caractérisé en ce qu'on utilise l'échangeur ionique (résine-catalyseur) chargé d'éléments doués d'activité catalytique en même temps comme catalyseur et pour l'adsorption des ions présents dans le milieu aqueux et on régénère les groupes à activité d'échange de l'échangeur ionique (résine-catalyseur) chargé d'éléments doués d'activité catalytique dès que ces groupes sont épuisés.

2. Procédé suivant la revendication 1, caractérisé en ce qu'on utilise un échangeur ionique chargé de métaux du 8è sous-groupe du système périodique.

3. Procédé suivant les revendications 1 et 2, caractérisé en ce qu'on utilise un échangeur cationique fortement acide ou un échangeur anionique fortement basique chargé de métaux du 8è sous-groupe du système périodique.

4. Procédé suivant les revendications 1 à 3, caractérisé en ce que les réactions catalytiques consistent en hydrogénations en milieux aqueux avec de l'hydrogène.

5. Procédé suivant les revendications 1 à 4, caractérisé en ce que les réactions catalytiques en milieux aqueux consistent en une hydrogénation catalytique d'oxygène en milieux aqueux.

**Claims**

1. Process for carrying out catalytic reactions in aqueous media by means of ion exchangers charged with catalytically active elements (catalyst resins), characterised in that the ion exchanger charged with the catalytically active elements (catalyst resin) is used simultaneously as a catalyst and for the adsorption of the ions present in the aqueous medium and the exchange-active groups of the ion exchanger charged with catalytically active elements (catalyst resin) are regenerated as soon as they are exhausted.

2. Process according to Claim 1, characterised in that an ion exchanger charged with metals of the 8th subgroup of the periodic system is used.

3. Process according to Claims 1 and 2, characterised in that a strongly basic anion exchanger or a strongly acidic cation exchanger, charged with metals of the 8th subgroup of the periodic system, is used.

4. Process according to Claims 1 to 3, characterised in that the catalytic reactions in aqueous media are hydrogenation reactions using hydrogen.

5. Process according to Claims 1 to 4, characterised in that the catalytic reactions in aqueous media represent the catalytic hydrogenation of oxygen in aqueous media.